**Europäisches Patentamt**

**European Patent Office**

**Office européen des brevets**

(11) Veröffentlichungsnummer: **0 031 522**
**B1**

(12) **EUROPÄISCHE PATENTSCHRIFT**

(45) Veröffentlichungstag der Patentschrift:
**25.01.84**

(21) Anmeldenummer: **80107809.8**

(22) Anmeldetag: **11.12.80**

(51) Int. Cl.³: **C 12 H 1/04**, B 01 D 37/02,
B 01 J 20/28

(54) Verfahren zum Filtrieren von Getränken.

(30) Priorität: **29.12.79 DE 2952726**

(43) Veröffentlichungstag der Anmeldung:
**08.07.81 Patentblatt 81/27**

(45) Bekanntmachung des Hinweises auf die Patenterteilung:
**25.01.84 Patentblatt 84/4**

(84) Benannte Vertragsstaaten:
**BE FR GB LU NL**

(56) Entgegenhaltungen:
**DE - A - 1 642 776
DE - A - 2 323 487
DE - A - 2 900 991
DE - B - 1 561 753
DE - C - 710 785
DE - C - 939 446**

(73) Patentinhaber: **Akzo GmbH,
Postfach 10 01 49 Kasinostrasse 19-23,
D-5600 Wuppertal-1 (DE)**

(72) Erfinder: **Steenken, Gerhard, Dr. Dipl.-Chem., Auf der
alten Kirche 3, D-5160 Düren-Berzbuir (DE)**
Erfinder: **Wegerhoff, Arno, Dr. Dipl.-Chem.,
Kronbergstrasse 7, D-8761 Wörth am Main (DE)**

Verfahren zum Filtrieren von Getränken

Die Erfindung betrifft ein Verfahren zum Filtrieren von Getränken, insbesondere von Bier nach dem Anschwemm-Filtrationsverfahren, bei dem ein Filterhilfsmittel auf der Basis von anorganischen Fasern eingesetzt wird.

Es ist bekannt, Getränke, insbesondere Bier, unter Einsatz sogenannter Filterhilfsmittel nach dem Verfahren der Anschwemm-Filtration zu filtrieren. Als Filterhilfsmittel werden z.B. Kieselgure, Perlite, Asbest und Cellulosefasern allein oder in Kombination miteinander verwendet. Für die Bierfiltration kommen bevorzugt Kieselgurgemische mit Asbest oder Cellulose zum Einsatz.

Bei der Anschwemmfiltration werden als Filter z.B. horizontal oder vertikal angeordnete Platten oder vertikal hängende bzw. stehende Kerzen eingesetzt, auf denen man durch Anschwemmen von Filterhilfsmittel eine oder mehrere Schichten aufbaut, die der Filtration dienen. So kann man z.B., wie es häufig bei der Filtration von Bier durchgeführt wird, zunächst eine erste Voranschwemmung aus Grobgur, sodann eine zweite Voranschwemmung, bestehend aus mittelfeinem Gur oder einer Mischung aus Fein- und Grobgur mit Wasser auftragen und sodann die Filtration des Bieres auf die Weise durchführen, dass man dem trüben Bier vor dem Eintritt in das Filter laufend eine mittelfeine Gur bzw. ein Gemisch aus Grob- und Feingur zudosiert, welches 2 bis 10 Gew.-% Fasermaterial, wie Asbest oder Cellulose enthalten kann.

Häufig wird auch der ersten Voranschwemmung ein faserförmiges Filterhilfsmittel, z.B. Asbest, in Mengen von 10 bis 15 Gew.-%, bezogen auf die Grobgur, zugesetzt. die Voranschwemmung kann auch aus einem fasrigen Filterhilfsmittel allein bestehen.

Für die Filtration von Getränken wie Bier werden drei Hauptforderungen aufgestellt:
1. Lange Filterstandzeit
2. Befriedigende Mengenleitung ausgedrückt in hl/m² · Zeit
3. Möglichst quantitatives Abtrennen der durch die Filtration zu beseitigenden unerwünschten Bestandteile.

Als faserförmiges Filterhilfsmittel wird zur Zeit vorzugsweise Asbest eingesetzt, der eine ganze Reihe von Nachteilen aufweist. Asbest baut sich bekanntlich aus äusserst feinen Einzelfibrillen auf, und es ist deshalb nicht zu vermeiden, dass einzelnen Asbestpartikel bei der Filtration mit der zu filtrierenden Flüssigkeit durch das Filter gelangen. Mit sehr feinen Analysenmethoden war es möglich, in einer ganzen Reihe von filtrierten Getränken, wie z.B. Wein, Asbest nachzuweisen.

Gegen die Verwendung von Asbest sind in der letzten Zeit aus Gründen des Umweltschutzes erhebliche Bedenken vorgebracht worden. Asbest ist gesundheitsschädlich, insbesondere krebserregend oder krebsfördernd. Diese Gefahren bestehen vor allem bei der Gewinnung und bei dem Aufarbeiten von Asbest. Man rechnet mit Massnahmen des Gesetzgebers, die zum Ziele haben sollen, in absehbarer Zeit den Einsatz und die Verarbeitung von Asbest entweder vollständig zu verbieten oder weitgehendst auszuschliessen.

Ganz abgesehen von diesen Gründen ist Asbest auch ein Rohstoff, der nicht in unbegrenzten Mengen zur Verfügung steht.

Der Einsatz von Cellulose anstelle von Asbestfasern in Filterhilfsmitteln weist den Nachteil auf, dass man, um annähernd gleiche Filtereffekte wie mit Asbest erreichen zu können, teilweise mehr als die siebenfache Menge an Cellulosefasern einsetzen muss. Dies bedeutet, dass die Filterschichten erheblich dicker werden als bei einer Verwendung von Asbest, wodurch die Filterstandzeit herabgesetzt wird.

In der deutschen Patentschrift Nr. 710 785 wird die Filtration von Bier unter der Verwendung von frisch gefälltem, gegebenenfalls gepresstem und geformtem Kieselsäurehydrat beschrieben. Die DE-C-939 446 lehrt die Verwendung von organischen und anorganischen Fasern, ohne allerdings Fasern der Art zu nennen, wie sie die Erfindung vorschlägt.

Die DE-B-1 561 753 beschreibt ein Filtermaterial, bei der u.a. Asbest und Glasfasern verwendet werden. Glasfasern bringen jedoch nicht die Vorteile, welche der erfindungsgemässe Einsatz von Kieselsäurefasern bringt. In der DE-A-1 642 776 wird der Einsatz von frisch gefällter Kieselsäure beim Filtrieren und Stabilisieren von Bier gelehrt, ohne dass dabei Fasern erwähnt werden, wie sie erfindungsgemäss eingesetzt werden.

Schliesslich beschreibt die DE-A-2 323 487 ein Verfahren zum Stabilisieren von Bier, bei dem ein Hydrogel eingesetzt wird.

Trotz der zahlreichen Möglichkeiten Filterhilfsmittel, insbesondere solche auf anorganischer Basis zu verwenden, ist man an weiteren, verbesserten und leichter zugänglichen Filterhilfsmitteln auf anorganischer Basis interessiert.

Es besteht somit noch das Bedürfnis nach einem Verfahren, das unter der Verwendung eines Filterhilfsmittels arbeitet, das kein Asbest enthält und das eine gute und einwandfreie Filtration von Getränken ermöglicht.

Aufgabe der Erfindung ist es deshalb, ein Verfahren zum Filtrieren von Getränken, insbesondere von Bier nach den Anschwemm-Filtrationsverfahren zur Verfügung zu stellen, das hohe Filterstandszeiten, eine gute Mengenleistung und ein einwandfreies Abtrennen der unerwünschten Bestandteile ermöglicht. Diese Aufgabe wird durch ein Verfahren zum Filtrieren von Getränken, insbesondere von Bier nach dem Anschwemm-Filtrationsverfahren gelöst, das dadurch gekennzeichnet ist, dass man als Filterhilfsmittel ein Mittel einsetzt, das ganz oder teilweise aus Fasern aus praktisch reiner Kieselsäure mit einer Stapellänge von etwa 30 bis 7000 $\mu$m und einem Durchmesser von etwa 4 bis 20 $\mu$m besteht, die dadurch erhalten worden sind, dass man wasserhaltiges Natronwasserglas trocken verspinnt und die erhaltenen Wasserglasfasern zur Umwandlung des Natriumsilikats in Kieselsäure mit wässrigen, wasserstoffionenhaltigen Säure- oder Salzlösungen behandelt.

Die Kieselsäurefasern weisen vorzugsweise eine Stapellänge von etwa 100 bis 3000 $\mu$m auf. Beson-

ders geeignet sind Kieselsäurefasern einer Stapellänge von etwa 200 bis 1400 $\mu$m und eines Durchmessers von 11 bis 18 $\mu$m. Es ist günstig, wenn das Filterhilfsmittel 2 bis 10 Gew.-% Kieselsäurefasern enthält. Das Filterhilfsmittel kann 2 bis 10 Gew.-% Kieselsäurefasern und 98 bis 90 Gew.-% Kieselgur enthalten, wobei 3 bis 5 Gew.-% Kieselsäurefasern 97 bis 95 Gew.-% Kieselgur bevorzugt werden. Anstelle von Kieselgur kann auch Fällungskieselsäure, Perlite oder andere Filterhilfsmittel verwendet werden. Es ist möglich, die Kieselgur durch die erwähnten Filtermittel ganz oder teilweise zu substituieren. Den Kieselsäurefasern kann im Rahmen der Erfindung bis zu 50 Gew.-% Faserkurzschnitt aus organischen Fasern beigemengt sein.

Die Kieselsäurefasern werden vorzugsweise als nasszerkleinerte Fasern eingesetzt.

Im einer besonders vorteilhaften Ausführungsform der Erfindung gelangen Kieselsäurefasern zum Einsatz, die erhalten worden sind, indem man trocken gesponnene, wasserhaltige Natronwasserglasfasern, die im wesentlichen frei von Nichtalkalimetallverbindungen sind und ein 1 : 1,9 aufweisen, zur Umwandlung des Natriumsilicats in Kieselsäure mit wässrigen, wasserstoffionenhaltigen Säure- oder Salzlösungen behandelt, die so erhaltenen Kieselsäurefasern wäscht und trocknet sowie gegebenenfalls thermisch nachbehandelt.

Die in dem Filterhilfsmittel vorhanden Kieselsäurefasern, welche in dem erfindungsgemässem Verfahren zum Einsatz gelangen, haben vorzugsweise eine Oberfläche von etwa 15 bis 350 m²/g.

Zur Herstellung eines Filterhilfsmittels aus anorganischen Fasern für die Getränkefiltration, insbesondere die Bierfiltration nach dem Anschwemmfiltrationsverfahren, wie es gemäss der Erfindung zum Einsatz gelangt, kann ein Verfahren dienen, was dadurch gekennzeichnet ist, dass man Kieselsäurefasern, die durch Trockenverspinnen von wasserhaltigem Natronwasserglas und Behandelt der erhaltenen Fasern zur Umwandlung des Natriumsilikats in Kieselsäure mit wässrigen wasserstoffionenhaltigen Säure- oder Salzlösung erhalten worden sind und einen Durchmesser von 4 bis 20 $\mu$m aufweisen, durch Nasszerkleinern auf eine Stapellänge im Bereich von etwa 30 bis 7000 $\mu$m bringen. Vorzugsweise werden dabei die Kieselsäurefasern durch Nassvermahlen auf eine Stapellänge im Bereich von etwa 100 bis 3000 $\mu$m gebracht.

Zur Herstellung der als Filterhilfsmittel eingesetzten Kieselsäurefasern werden zunächst trockengesponnene wasserhaltige Natronwasserglasfasern hergestellt, die im wesentlichen frei von nicht Alkalimetallverbindungen sind und ein molares Verhältnis von $Na_2O$ : $SiO_2$ von etwa 1 : 3 bis 1 : 1,9 aufweisen, die sodann zur Umwandlung des Natriumsilikats in Kieselsäure mit wässrigen, wasserstoffionenhaltigen Säure- oder Salzlösungen behandelt werden, die dabei erhaltenen Kieselsäurefasern werden sodann gewaschen und getrocknet und gegebenenfalls thermisch nachbehandelt.

Die dabei entstehende Kieselsäurefaser weist einen Durchmesser von etwa 4 bis 20 $\mu$m auf. Der Durchmesser der Kieselsäurefasern lässt sich durch entsprechendes Variieren der Fördermenge des Natronwasserglases beim Spinnen und durch Einstellen eines entsprechenden Verzuges regulieren.

Die auf diese Weise erhaltenen Endlosfasern werden sodann in nassem Zustand zu einem sogenannten Kurzschnitt zerkleinert, wobei beispielsweise ein üblicher rotierender Messerkranz zum Einsatz gelangen kann. Besonders günstig ist es, wenn man die Filamente in Wasser aufschwemmt und diese Aufschwemmung einer Nasszerkleinerung insbesondere einer sogenannten Nassvermahlung unterzieht; diese kann z.B. in einer Vorrichtung wie einem Henschel-Mischer durchgeführt werden, der im wesentlichen aus einem Behälter und rotierenden Werkzeugen besteht. Ein solcher Mischer z.B. der Henschel-Fluidmischer Type FM150 D ist im Handel z.B. bei der Firma Henschel-Werke GmbH, Kassel erhältlich. Die erfindungsgemässen Filterhilfsmittel können einen kleineren Anteil Fasern mit Längen ausserhalb des beanspruchten Bereichs enthalten.

Die zerkleinerten Fasern können sodann direkt, vorzugsweise jedoch in Mischung mit Kieselgur oder gefällter Kieselsäure sowie gegebenenfalls anderen organischen Fasern als Filterhilfsmittel zum Einsatz gelangen.

Unter Kieselsäurefasern im Rahmen der vorliegenden Erfindung sind Fasern zu verstehen, die als Hauptbestandteil $SiO_2$ oder polymere Kieselsäurekomplexe $(SiO_2)_n$ enthalten, wie sie formal gesehen durch Kondensation von Orthokieselsäure entstehen.

Vorzugsweise haben die Kieselsäurefasern der vorliegenden Erfindung im getrockneten Zustand einen $SiO_2$-Gehalt von über 95 Gew.-%, insbesondere über 98 oder sogar 99,5 und mehr Gew.-%.

Die Kieselsäurefasern brauchen nach ihrer Herstellung, d.h. dem Trockenverspinnen von Wasserglas, Behandeln mit Salzsäure und Waschen mit Wasser und dem Zerkleinern nicht getrocknet zu werden und können somit mit entsprechend hohen Wassergehalten eingesetzt werden.

Es können adsorbiertes Wasser enthaltende und/oder nur SiOH-Gruppen aufweisende Fasern eingesetzt weden, welche z.B. aus Natronwasserglasfasern nach Behandlung mit verdünnter Salzsäure und Trocknen bei Temperaturen bis etwa 120°C entstehen. Es ist auch möglich, bei höheren Temperaturen z.B. über 800°C getemperte, praktisch wasserfreie und SiOH-gruppenarme Kieselsäurefasern einzusetzen. Die Fasern sind vorzugsweise praktisch frei von sonstigen Oxiden wie $Al_2O_3$, MgO usw.

Es war besonders überraschend, dass die Erfindung den Aufbau eines ausgezeichneten Filterkuchens mit Fasermengen erlaubt, die gleich oder sogar geringer sind, als es beim Einsatz von Filterasbest üblich ist. So kann z.B. bei der Verwendung von Grobgur und Kieselsäurefasern ein Filterkuchen aufgebaut werden, der sehr grosse Festigkeiten und einen hervorragenden Zusammenhalt besitzt, so dass er nach Abschluss der Filtration mühelos und ohne Rückstände von der Filterstützschicht entfernt werden kann. Dies war nicht zu erwarten, da die Kieselsäurefaser weder aus hochfeinem Einzelfibrillen aufgebaut ist, auf die man beim Einsatz von Asbest als Filterhilfsmittel die Verfilzung zurückführt, noch eine entsprechende Kräuselung besitzt, die bei der Verwendung von Cellulosefasern den Zusammenhalt des Filterkuchens fördert.

Das Kuchenvolumen ist relativ gross, was darauf hinweist, dass ausreichend Zwischenraum im Filterkuchen vorhanden ist, wodurch ein guter Filtereffekt erzielt wird, nämlich Durchsatz einer hohen Flüssigkeitsmenge bei gleichzeitig grosser Klärschärfe und langen Filterstandszeiten. Die Durchflusswerte sind ausgezeichnet. Das erfindungsgemässe Filterhilfsmittel erlaubt auch eine gute Dosierung während der Filtration. Es können übliche Sorptionsmittel mitverwendet werden. Die Kompressibilität des Filtermaterials ist günstig.

In vielen Fällen ist es möglich, mit weniger Filterhilfsmittel auszukommen, als das bisher der Fall war, so dass sich Einsparungen sowohl bei der Primär- als auch bei der Sekundäranschwemmung, sofern eine solche erforderlich ist, erzielen lassen. Das Filterhilfsmittel kann bei allen üblichen Filtern, z.B. Schichtenanschwemmfilter, Kesselanschwemmfilter, Rahmenfilter und Spaltfiltern u.dgl. eingesetzt werden.

Beim Dosieren lassen sich ohne weiteres die für die Bierstabilisation üblichen Hilfsmittel mitverwenden. Ein Aufspalten in kleine Einzelfibrillen und Partikel, wie das beim Asbest der Fall ist, findet nicht statt, so dass kaum eine Gefahr besteht, dass Kieselsäurepartikel mit in das Filtrat gelangen. Der Filterkuchen ist weitgehend unempfindlich gegenüber Druckstössen und Gelägereinzug.

Beim Filtrieren erhält man ein klares Filtrat, so dass die Getränke, was insbesondere beim Bier von grosser Bedeutung ist, lange Zeit lagerstabil sind. Das Filterhilfsmittel gemäss der Erfindung ist geschmacksneutral, so dass durch die Filtration der Geschmack des Getränkes nicht zu seinem Nachteil verändert wird. Es lässt sich bei der Filtration aller üblichen Getränke, insbesondere auch bei der Klärung von obergärigem und untergärigem Bier einsetzen. Es kann als Hilfsmittel auch bei der Würzefiltration verwendet werden.

Die Oberfläche, gemessen nach BET, kann über 300 m$^2$/g betragen, jedoch sind die Porendurchmesser so klein, dass die innere Oberfläche für die Adsorption von Bierinhaltsstoffen nicht wirksam werden kann.

Die BET-Methode wird z.B. in J. Am. Chem. Soc. 60, 309-319 (1938) beschrieben.

Der Aufbau des Filterkuchens unter Verwendung des erfindungsgemässen Filterhilfsmittels ist sehr homogen; Der Filterkuchen weist praktisch keine oder nur sehr geringe Kompressibilität auf und lässt sich gut biegen, ohne dass er dabei bricht. Ein weiterer Vorteil des Filtermittels ist, dass die Kieselsäurefasern sehr preisgünstig zugänglich sind und im Gegensatz zu Asbest in praktisch unbegrenzten Mengen zur Verfügung stehen. Umweltprobleme stellen sich bei der Herstellung und beim Einsatz der Filterhilfsmittel gemäss der Erfindung nicht.

Die Erfindung wird durch folgende Beispiele näher erläutert:

*Beispiel 1*
Herstellung der Kieselsäurefasern

Unter einer praktisch CO$_2$-freien Atmosphäre wird in einem 2 l fassenden Ansetzbehälter aus rostfreiem Stahl, ausgerüstet mit Temperiermantel, Einfüllstutzen, Ankerrührer und Abflusshahn am Boden eine Lösung aus 2200 g Natronwasserglas 39° BE, Molverhältniszahl Na$_2$O/SiO$_2$ = 1 : 3,38 und 85,5 g NaOH bei 70°C und 200 mbar eingeengt, bis eine Viskosität von 240 Pa · s, gemessen bei 30°C, erreicht ist. Durch den Natronlaugezusatz wird die Molverhältniszahl Na$_2$O/SiO$_2$ auf 1 : 2,48 angehoben. Die Masse ist nach Filtration durch ein Batist-Tuch zur Verspinnung geeignet.

Man verbindet den Ansatzbehälter mit einer Spinnapparatur, welche im wesentlichen aus einer Zahnradpumpe, einer Düsenplatte mit 60 Bohrungen mit einem Durchmesser von 130 $\mu$m und einem 8 m langen Trockenspinnschacht besteht.

Die Halterung der Düsenplatte und die Zuleitung haben ebenfalls einen Temperiermantel. Die Temperatur der Spinnlösung soll bei der Verspinnung 30°C betragen. Die aus der Düse austretenden Fäden werden im senkrecht angeordneten Trockenspinnschacht verzogen, wobei der Verzug 41,5 und die Abzugsgeschwindigkeit 500 m/min betragen. Mit dieser Geschwindigkeit werden die Fäden auch aufgespult. Als Trägergas für die Trocknung im Spinnschacht dient im Gegenstrom aufsteigende, auf ca. 150°C erwärmte Luft.

5 kg dieser Wasserglasfasern werden von den Spulen abgestreift und eine Minute mit 1 n Salzsäure von 25°C behandelt, sodann mit destilliertem Wasser gewaschen, bis das Waschwasser chloridfrei ist.

Zur Herstellung von Faserkurzschnitt dient ein 150 l fassender Henschel-Mischer. Die noch feuchten, aus 5 kg Wasserglasfasern hergestellten Kieselsäurefasern werden in 70 Liter Wasser aufgeschlämmt und 10 Minuten mit 1500 U/min in dem Henschel-Mischer vermahlen. Nach Entfernen des Wassers durch Abschleudern werden die Fasern getrocknet. Man erhält dabei Kieselsäurefasern mit folgendem Aufbau:

Durchmesser von 11 bis 18 $\mu$m,
Stapellängen von 30 bis 2500 $\mu$m, wobei das Maximum der Stapellängenverteilung zwischen 200 und 1400 $\mu$m liegt.

Die folgenden Vergleichsfiltrationen wurden mit einem üblichen Seitzfilter, dessen Stützschichtenmasse 60 × 60 cm$^2$ und dessen Filterfläche 16,7 m$^2$ betrugen, durchgeführt. Die Filterleistung lag zwischen 50 bis 45 hl/Stunde. Pro Filtration wurden ca. 200 hl Bier filtriert. Für die Filtrationen nach Beispiel 2 und 3 wurden gleiche, normalgelagerte Biere verwendet. In Beispiel 4 wurde ein Bier mit etwas kürzerer Lagerzeit eingesetzt, das entsprechend weniger gut vorgeklärt war.

*Beispiel 2*
Vergleichsfiltration unter der Verwendung von Asbest.

Auf übliche Weise wurde eine erste Voranschwemmung mit 3 kg Grobgur (ca. 180 g/m$^2$) und 0,35 kg Asbest /21 g/m$^2$) durchgeführt. Zur zweiten Voranschwemmung dienten 9 kg mittelfeine Gur (540 g/m$^2$). Die Filtration wurde mit einer laufenden Dosierung von 120 g mittelfeine Gur/hl durchgeführt.

*Beispiel 3*

Die Filtration wurde im wesentlichen wie in Beispiel 2 durchgeführt, jedoch wurden anstelle von 0,35 kg Asbest 0,35 kg Kieselsäurefasern eingesetzt. Die Kieselsäurefasern hatten folgende Eigenschaften:

Oberfläche 310 m²/g,
Porenvolumen 0,12 ml/g,
Faserdurchmesser zwischen 11 bis 19 $\mu$m,
Stapellängen zwischen 30 und 2500 $\mu$m,
wobei die Hauptmenge zwischen 200 und 1400 $\mu$m lag.

*Beispiel 4*

Es wurde eine erste Voranschwemmung mit 3 kg Grobgur (180 g/m²) und 0,35 kg Kieselsäurefasern (21 g/m²) durchgeführt.

Die Kieselsäurefasern hatten folgende Eigenschaften:

Oberfläche nach BET 17 m²/g,
Porenvolumen 0,2 ml/g,
Faserdurchmesser zwischen 12 und 16 $\mu$m,
Stapellängen zwischen 50 und 5200 $\mu$m,
wobei die Hauptmenge zwischen 650 und 2600 $\mu$m lag.

Zur zweiten Voranschwemmung dienten 9 kg mittelfeine Gur (540 g/m²).

Die Filtration wurde mit einer laufenden Dosierung von 140 g mittelfeine Gur/hl und 6 g Kiesellsäurefasern/hl durchgeführt.

Die Kenndaten der Kieselsäurefasern waren:

Oberfläche nach BET 18 m²/g,
Porenvolumen 0,15 ml/g
Faserdurchmesser 10 bis 15 $\mu$m
Stapellängen 17 bis 1750 $\mu$m (Hauptmenge etwa 30 bis 350 $\mu$m).

Die Filtrationen zeigten folgende Ergebnisse:

Die filtrierten Biere nach Beispiel 2 und 3 unterschieden sich in Geschmack und Farbe. Das mit Asbest filtrierte Bier war deutlich heller und weniger voll im Geschmack. Die Resttrübe war in beiden Bieren gleich und lag im Filtrationsverlauf zwischen 0,25 bis 0,3 EBC-Einheiten. Die organische Substanzmenge betrug im Filterkuchen des Beispiels 2 9,5 bis 16% und im Filterkuchen des Beispiels 3 9,1 bis 15% bezogen auf den Glührückstand.

Es wurden 9 Filterkuchenproben auf organische Substanz untersucht, d.h. der Glühverlust einer bei 180°C getrockneten Probe. Nach der Filtration wurden an jeweils 3 Filterschichten an 3 äquivalenten Stellen, nämlich Filtereinlauf, -mitte und -auslauf Proben entnommen.

Das Ausgangsbier in Beispiel 4 hatte eine kürzere Lagerzeit und enthielt mehr Trübstoffe. Durch die geringe Dosierung von relativ kurzen Kieselsäurefasern blieb die Filterleistung (189 hl/4 Std.) ohne Erhöhung der Resttrübe gleich, trotz höherer Trübstoffmenge im unfiltrierten Bier und höherer Gurdosierung. Die Resttrübe betrug wie in den vorangegangenen Bieren der Beispiele 2 und 3 0,25 bis 0,3 EBC-Einheiten. Die organische Substanzmenge lag entsprechend höher zwischen 13 und 21% bezogen auf den Glührückstand. Es wurden 12 Filterkuchenproben verwendet, die, wie in den Beispielen 2 und 3 beschrieben, von 4 Filterkuchenschichten an den drei charakteristischen Stellen entnommen wurden.

**Patentansprüche**

1. Verfahren zum Filtrieren von Getränken, insbesondere von Bier nach dem Anschwemm-Filtrationsverfahren, dadurch gekennzeichnet, dass man als Filterhilfsmittel ein Mittel einsetzt, das ganz oder teilweise aus Fasern aus praktisch reiner Kieselsäure mit einer Stapellänge von etwa 30 bis 7000 $\mu$m und einem Durchmesser von etwa 4 bis 20 $\mu$m besteht, die dadurch erhalten worden sind, dass man wasserhaltiges Natronwasserglas trocken verspinnt und die erhaltenen Wasserglasfasern zur Umwandlung des Natriumsilikats in Kieselsäure mit wässrigen, wasserstoffionenhaltigen Säure- oder Salzlösungen behandelt.

2. Verfahren nach Anspruch 1, dadurch gekennzeichnet, dass man Kieselsäurefasern einer Stapellänge von etwa 100 bis 3000 $\mu$m verwendet.

3. Verfahren nach Anspruch 2, dadurch gekennzeichnet, dass man Kieselsäurefasern einer Stapellänge von etwa 200 bis 1400 $\mu$m und einem Durchmesser von etwa 11 bis 18 $\mu$m verwendet.

4. Verfahren nach einem der Ansprüche 1 bis 3, dadurch gekennzeichnet, dass man ein Filterhilfsmittel verwendet, das 2 bis 10 Gew.-% Kieselsäurefasern enthält.

5. Verfahren nach Anspruch 4, dadurch gekennzeichnet, dass man ein Filterhilfsmittel verwendet, das 2 bis 10 Gew.-% Kieselsäurefasern und 98 bis 90 Gew.-% Kieselgur enthält.

6. Verfahren nach Anspruch 5, dadurch gekennzeichnet, dass man ein Filterhilfsmittel verwendet, das 3 bis 5 Gew.-% Kieselsäurefasern und 97 bis 95 Gew.-% Kieselgur enthält.

7. Verfahren nach einem der Ansprüche 5 bis 6, dadurch gekennzeichnet, dass man ein Filterhilfsmittel verwendet, bei dem die Kieselgur ganz oder teilweise durch Fällungskieselsäure, Perlite oder andere Filterhilfen substituiert ist.

8. Verfahren nach einem der Ansprüche 1 bis 7, dadurch gekennzeichnet, dass man ein Filterhilfsmittel verwendet, das Kieselsäurefasern enthält, denen bis zu 50 Gew.-% Faserkurzschnitt aus organischen Fasern beigemengt ist.

9. Verfahren nach einem der Ansprüche 1 bis 8, dadurch gekennzeichnet, dass man nasszerkleinerte Kieselsäurefasern verwendet.

10. Verfahren nach einem der Ansprüche 1 bis 9, dadurch gekennzeichnet, dass man Kieselsäuresern verwendet, die hergestellt worden sind, indem man trocken gesponnene, wasserhaltige Natronwasserglasfasern, die im wesentlichen frei von Nichtalkalimetallverbindungen sind und ein molares Verhältnis von $Na_2O : SiO_2$ von etwa 1 : 3 bis 1 : 1,9 aufweisen, zur Umwandlung des Natriumsilicats in Kieselsäure mit wässrigen, wasserstoffionenhaltigen Säure- oder Salzlösungen behandelt, die so erhaltenen Kieselsäurefasern wäscht und trocknet sowie gegebenenfalls thermisch nachbehandelt.

## Claims

1. A process for the filtration of beverages, in particular beer, according to the settling filtration process, characterised in that an agent is used as the filter auxiliary which partly or completely consists of fibres of practically pure silica having a staple length of from about 30 to 7,000 $\mu$m and a diameter of from about 4 to 20 $\mu$m, which fibres are obtained by dry-spinning aqueous soda-water glass and treating the resulting water glass fibres with aqueous, hydrogen ion-containing acid or salt solutions to convert the sodium silicate into silica.

2. A process according to claim 1, characterised in that silica fibres having a staple length of from about 100 to 3,000 $\mu$m are used.

3. A process according to claim 2, characterised in that silica fibres having a staple length of from about 200 to 1,400 $\mu$m and a diameter of from about 11 to 18 $\mu$m are used.

4. A process according to one of claims 1 to 3, characterised in that a filter auxiliary is used which contains from 2 to 10% by weight of silica fibres.

5. A process according to claim 4, characterised in that a filter auxiliary is used which contains from 2 to 10% by weight of silica fibres and from 98 to 90% by weight of kieselguhr.

6. A process according to claim 5, characterised in that a filter auxiliary is used which contains from 3 to 5% by weight of silica and from 97 to 95% by weight of kieselguhr.

7. A process according to one of claims 5 to 6, characterised in that a filter auxiliary is used, in which the kieselguhr is partly or completely substituted by precipitation silica, by perlites or by other filter auxiliaries.

8. A process according to one of claims 1 to 7, characterised in that a filter auxiliary is used which contains silica fibres, to which are added up to 50% by weight of short fibre cut of organic fibres.

9. A process according to one of claims 1 to 8, characterised in that wet-crushed silica fibres are used.

10. A process according to one of claims 1 to 9, characterised in that silica fibres are used which are produced by treating dry-spun, aqueous soda-water glass fibres which are substantially free of non-alkali metal compounds and have a molar ratio of Na$_2$O : SiO$_2$ of from about 1 : 3 to 1 : 1.9, with aqueous, hydrogen ion-containing acid or salt solutions to convert the sodium silicate into silica, washing the thus obtained silica fibres, drying them and optionally subjecting them to a thermal aftertreatment.

## Revendications

1. Procédé pour la filtration des boissons, en particulier de la bière selon le procédé de filtration avec apport de matières filtrantes, caractérisé par le fait qu'on utilise comme adjuvant de filtration, un agent qui est constitué en totalité ou en partie par des fibres d'acide silicique pratiquement pur ayant une longueur de fibres coupées d'environ 30 à 7000 $\mu$m et un diamètre d'environ 4 à 20 $\mu$m, qui ont été obtenues en filant à sec du silicate de sodium aqueux et en traitant les fibres de silicate de sodium obtenues, pour transformer le silicate de sodium en acide silicique, avec des solutions acides ou salines aqueuses contenant des ions hydrogène.

2. Procédé selon la revendication 1, caractérisé par le fait qu'on utilise des fibres d'acide silicique ayant une longueur de fibres coupées d'environ 100 à 3000 $\mu$m.

3. Procédé selon la revendication 2, caractérisé par le fait qu'on utilise des fibres d'acide silicique ayant une longueur de fibres coupées d'environ 200 à 1400 $\mu$m et un diamètre d'environ 11 à 18 $\mu$m.

4. Procédé selon l'une des revendications 1 à 3, caractérisé par le fait qu'on utilise un adjuvant de filtration qui contient 2 à 10% en poids de fibres d'acide silicique.

5. Procédé selon la revendication 4, caractérisé par le fait qu'on utilise un adjuvant de filtration qui contient 2 à 10% en poids de fibres d'acide silicique et de 98 à 90% en poids de terre d'infusoires.

6. Procédé selon la revendication 5, caractérisé par le fait qu'on utilise un adjuvant de filtration qui contient 3 à 5% en poids de fibres d'acide silicique et de 97 à 95% en poids de terre d'infusoires.

7. Procédé selon l'une des revendications 5 et 6, caractérisé par le fait qu'on utilise un adjuvant de filtration dans lequel la terre d'infusoires est substitué en totalité ou en partie par de l'acide silicique précipité, de la perlite ou d'autres adjuvants de filtration.

8. Procédé selon l'une des revendications 1 à 7, caractérisé par le fait qu'on utilise un adjuvant de filtration qui contient des fibres d'acide silicique auxquelles est mélangée jusqu'à 50% en poids d'une coupe courte de fibres constituée de fibres organiques.

9. Procédé selon l'une des revendications 1 à 8, caractérisé par le fait qu'on utilise des fibres d'acide silicique broyées à l'état humide.

10. Procédé selon l'une des revendications 1 à 9, caractérisé par le fait qu'on utilise des fibres d'acide silicique qui ont été préparées en traitant des fibres de silicate de sodium aqueuse filées à sec qui sont essentiellement exemples de composés métalliques non-alcalins, et qui présentent un rapport molaire de Na$_2$O : SiO$_2$ d'environ 1 : 3 à 1 : 1,9, avec des solutions aqueuses acides ou salines contenant des ions hydrogène pour transformer le silicate de socium en acide silicique, en lavant les fibres d'acide silicique ainsi obtenues et en les séchant et leur faisant subir éventuellement un traitement thermique.